# FASCICULE DE BREVET EUROPEEN

(11) **EP 2 666 901 B1**
(45) Date de publication et mention de la délivrance du brevet: **18.02.2015**
(21) Numéro de dépôt: 13168379.9
(22) Date de dépôt: 17.05.2013
(51) Int. Cl.: D06F 58/08, D06F 58/28, D06F 58/20

(54) **Machine à sécher le linge**
Wäschetrockner
Tumble-dryer machine

(30) Priorité: 21.05.2012 FR 1201453
(43) Date de publication de la demande: 27.11.2013
(73) Titulaire: FagorBrandt SAS, 92500 Rueil-Malmaison (FR)
(72) Inventeur: Pont , Hervé, 71680 Vinzelles (FR)
(74) Mandataire: Santarelli

(56) Documents cités:
- EP-A1- 1 564 324
- FR-A1- 2 481 722
- GB-A- 915 244
- GB-A- 1 470 620
- GB-A- 2 073 289
- US-A- 3 429 056

## Description

La présente invention concerne une machine à sécher le linge comprenant un moteur d'entraînement en rotation d'un tambour et d'une turbine d'au moins un ventilateur mettant en circulation un flux d'air au travers d'un circuit d'air de séchage.

De manière générale, la présente invention concerne l'entraînement en rotation d'une turbine d'au moins un ventilateur dans un sens de rotation unique à partir d'un moteur pouvant entraîner en rotation un arbre de sortie dans un premier et un deuxième sens de rotation.

Plus particulièrement, la présente invention trouve son application dans les machines à sécher le linge domestiques.

On connaît déjà des machines à sécher le linge comprenant une carrosserie logeant un tambour, le tambour étant entraîné en rotation par un moteur et traversé par de l'air de séchage provenant d'un circuit d'air de séchage, le circuit d'air de séchage comprenant au moins un ventilateur, le moteur d'entraînement du tambour entraînant également en rotation une turbine dudit au moins un ventilateur, le moteur étant réalisé de manière à pouvoir être commuté de sorte à pouvoir entraîner en rotation un arbre de sortie dans un premier et un deuxième sens de rotation.

Ces machines à sécher le linge comprennent également un dispositif de chauffage en relation thermique avec le circuit d'air de séchage.

Des machines à sécher le linge comprennent un unique moteur entraînant en rotation un tambour et au moins une turbine d'un ventilateur d'un circuit d'air, en particulier une turbine d'un ventilateur du circuit d'air de séchage mettant en circulation un flux d'air de séchage au travers de la charge de linge contenue dans le tambour.

Les ventilateurs utilisés pour mettre en circulation un flux d'air de séchage au travers de la charge de linge contenue dans le tambour comprennent une turbine ayant des pales courbées, où ladite turbine est logée dans un carter. Le carter est généralement en forme de spirale.

Les ventilateurs comprenant une turbine ayant des pales courbées sont conçus pour fonctionner avec un sens de rotation préférentiel de la turbine.

Le moteur est conçu pour mettre en rotation un arbre de sortie dans un premier et un deuxième sens de rotation, où le deuxième sens de rotation est opposé au premier sens de rotation. L'arbre de sortie du moteur entraîne en rotation le tambour et la turbine du ventilateur du circuit d'air de séchage dans un sens de rotation identique.

L'inversion du sens de rotation de l'arbre de sortie du moteur a lieu périodiquement au cours d'un cycle de séchage mis en oeuvre par la machine à sécher le linge pour défouler le linge contenu dans le tambour et éviter que celui-ci ne s'emmêle sur lui-même. L'emmêlement du linge engendre un mauvais résultat de séchage et un froissement excessif de celui-ci.

Cependant, ces machines à sécher le linge présentent l'inconvénient d'entraîner en rotation la turbine du ventilateur du circuit d'air de séchage dans le sens de rotation préférentiel de la turbine uniquement dans un seul sens de rotation de l'arbre de sortie du moteur.

Au cours des phases de démêlage du linge où le sens de rotation de l'arbre de sortie du moteur est inversé pour entraîner le tambour dans un deuxième sens de rotation opposé au premier sens de rotation, la turbine du ventilateur du circuit d'air de séchage est également entraînée dans un sens de rotation inverse.

Par conséquent, le ventilateur du circuit d'air de séchage met en circulation un flux d'air de séchage réduit lié à la configuration des pales de la turbine lors de l'entraînement en rotation de l'arbre de sortie du moteur dans le deuxième sens de rotation.

Le débit d'air du ventilateur du circuit d'air de séchage est réduit lors de l'entraînement en rotation de l'arbre de sortie du moteur dans le deuxième sens de rotation puisque la turbine du ventilateur délivre un débit d'air inférieur dans le sens de rotation inversé de la turbine par rapport au sens de rotation préférentiel de la turbine.

Ainsi, le dispositif de chauffage en relation thermique avec le circuit d'air de séchage est arrêté de sorte à éviter une surchauffe de celui-ci provoquant sa destruction ou une mise en sécurité de la machine à sécher le linge par l'activation d'un élément de coupure de l'alimentation électrique, et à empêcher d'endommager le linge contenu dans le tambour.

De cette manière, ces phases de démêlage du linge, où le sens de rotation de l'arbre de sortie du moteur est inversé pour entraîner le tambour dans un deuxième sens de rotation opposé au premier sens de rotation et où la turbine du ventilateur du circuit d'air de séchage est également entraînée dans un sens de rotation inverse au sens de rotation préférentiel, sont des périodes nuisant à l'optimisation de la durée d'un cycle de séchage mis en oeuvre par la machine à sécher le linge puisque celles-ci ne permettent pas de continuer à chauffer l'air de séchage de sorte à participer au séchage du linge contenu dans le tambour.

L'énergie électrique consommée par le moteur au cours de ces phases de démêlage du linge est donc uniquement mise à profit pour défouler le linge contenu dans le tambour et non pour sécher le linge.

On connaît également le document EP 1 564 324 A1 qui décrit une machine à sécher le linge comprenant un tambour rotatif, un moteur électrique avec un arbre de sortie, une courroie principale engagée sur le périmètre dudit tambour, une poulie principale capable de transmettre le mouvement de rotation à ladite courroie principale, deux ventilateurs séparés verrouillés sur les têtes opposées dudit arbre de sortie, et fournis avec des dispositifs pour la détection et le contrôle de la vitesse dudit moteur électrique, lesquels dispositifs comprenant un arbre auxiliaire rotatif et un capteur de vitesse de rotation monté sur une tête ouverte dudit arbre auxiliaire, une poulie d'entraînement verrouillée sur ledit arbre de moteur, une poulie auxiliaire verrouillée sur ledit arbre rotatif auxiliaire, une courroie d'entraînement reliant ladite poulie d'entraînement à ladite poulie auxiliaire, et à une poulie principale verrouillée sur ledit arbre auxiliaire.

La présente invention a pour but de résoudre les inconvénients précités et de proposer une machine à sécher le linge comprenant un moteur entraînant en rotation un tambour dans deux sens de rotation et entraînant en rotation une turbine d'au moins un ventilateur permettant de réduire la consommation d'énergie au cours d'un cycle de séchage mis en oeuvre par ladite machine.

A cet égard, la présente invention vise une machine à sécher le linge comprenant une carrosserie logeant un tambour, ledit tambour étant entraîné en rotation par un moteur et traversé par de l'air de séchage provenant d'un circuit d'air de séchage, ledit circuit d'air de séchage comprenant au moins un ventilateur, ledit moteur d'entraînement dudit tambour entraînant également en rotation une turbine dudit au moins un ventilateur, ledit moteur étant réalisé de manière à pouvoir être commuté de sorte à pouvoir entraîner en rotation un arbre de sortie dans un premier et un deuxième sens de rotation, ladite machine comprenant également au moins un dispositif de chauffage en relation thermique avec ledit circuit d'air de séchage.

Selon l'invention, ladite machine comprend un dispositif d'entraînement intermédiaire monté sur ledit arbre de sortie dudit moteur de sorte à entraîner en rotation ladite turbine dudit au moins un ventilateur dans un sens de rotation unique quelque soit le sens d'entraînement en rotation dudit arbre de sortie dudit moteur, où ledit dispositif d'entraînement intermédiaire monté sur ledit arbre de sortie dudit moteur comprend une pluralité d'éléments d'entraînement et au moins un dispositif anti-retour.

Ainsi, la machine à sécher le linge comprenant un moteur entraînant en rotation un tambour dans un premier et un deuxième sens de rotation et entraînant en rotation une turbine d'au moins un ventilateur dans un unique sens de rotation quelque soit le sens de rotation de l'arbre de sortie du moteur permet de réduire la consommation d'énergie au cours d'un cycle de séchage mis en oeuvre par la machine.

De cette manière, un seul moteur entraîne en rotation le tambour et une turbine d'au moins un ventilateur, où l'entraînement en rotation du tambour peut être alterné, et où l'entraînement en rotation de la turbine d'au moins un ventilateur est réalisé toujours dans le même sens.

Le dispositif d'entraînement intermédiaire monté sur l'arbre de sortie du moteur permet donc d'entraîner en rotation une turbine d'au moins un ventilateur dans un sens de rotation unique, c'est-à-dire en sortie du dispositif d'entraînement intermédiaire, quelque soit le sens d'entraînement en rotation d'un arbre de sortie du moteur, c'est-à-dire en entrée du dispositif d'entraînement intermédiaire.

En outre, ledit au moins un ventilateur génère un flux d'air de séchage au travers du tambour contenant le linge à sécher lors de l'entraînement en rotation de l'arbre de sortie du moteur dans les premier et deuxième sens de rotation de sorte à éviter une interruption du séchage du linge.

Par ailleurs, l'entraînement en rotation de l'arbre de sortie du moteur dans un premier et un deuxième sens de rotation, où la turbine d'au moins un ventilateur est entraînée dans un unique sens de rotation quelque soit le sens de rotation de l'arbre de sortie du moteur, permet de garantir l'efficacité de séchage du linge contenu dans le tambour par la génération d'un flux d'air de séchage avec un débit d'air pouvant être maximal quelque soit le sens de rotation de l'arbre de sortie du moteur, tout en garantissant le démêlage du linge lors de l'inversion du sens de rotation du tambour par le passage de l'entraînement en rotation de l'arbre de sortie du moteur du premier au deuxième sens de rotation, et inversement.

Pratiquement, dans le premier sens de rotation dudit arbre de sortie dudit moteur, ledit arbre de sortie dudit moteur et ladite turbine dudit au moins un ventilateur sont entraînés en rotation dans le même sens de rotation, et dans le deuxième sens de rotation dudit arbre de sortie dudit moteur, ladite turbine dudit au moins un ventilateur est entraînée en rotation en sens inverse par rapport au sens d'entraînement en rotation dudit arbre de sortie dudit moteur.

Ainsi, dans le premier sens de rotation de l'arbre de sortie du moteur, où l'arbre de sortie du moteur et la turbine dudit au moins un ventilateur sont entraînés en rotation dans le même sens de rotation, l'entraînement de la turbine dudit au moins un ventilateur est direct, et de préférence à la même vitesse.

Et dans le deuxième sens de rotation de l'arbre de sortie du moteur, où la turbine dudit au moins un ventilateur est entraînée en rotation en sens inverse par rapport au sens d'entraînement en rotation de l'arbre de sortie du moteur, l'entraînement de la turbine dudit au moins un ventilateur est indirect et au travers d'éléments d'entraînement du dispositif d'entraînement intermédiaire permettant d'inverser le sens de rotation entre l'entrée et la sortie du dispositif d'entraînement intermédiaire.

Avantageusement, ledit tambour est entraîné en rotation dans le même sens de rotation que ledit arbre de sortie dudit moteur.

Ainsi, dans le premier sens de rotation de l'arbre de sortie du moteur, le tambour et la turbine dudit au moins un ventilateur sont entraînés en rotation dans le même sens de rotation, et dans le deuxième sens de rotation de l'arbre de sortie du moteur, la turbine dudit au moins un ventilateur est entraînée en rotation en sens inverse par rapport au sens d'entraînement en rotation du tambour.

D'autres particularités et avantages de l'invention apparaîtront encore dans la description ci-après.

Aux dessins annexés, donnés à titre d'exemples non limitatifs :

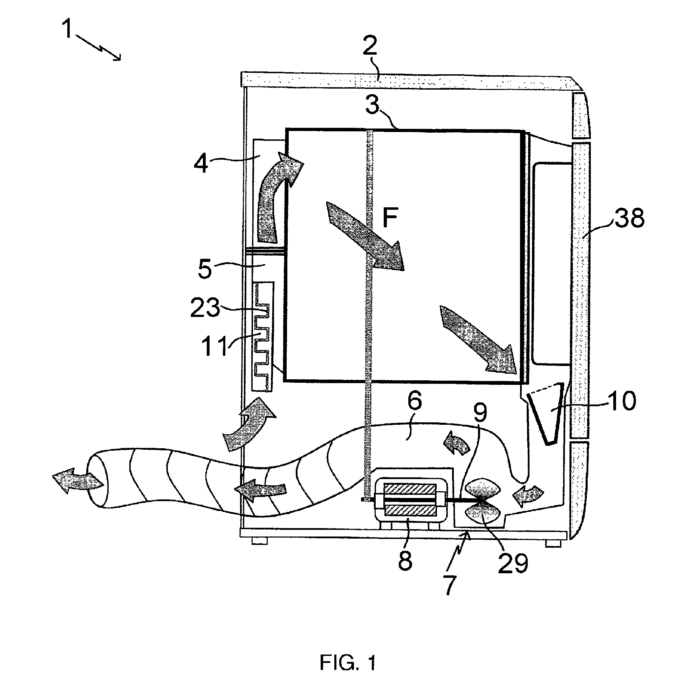

- la figure 1 est une vue schématique d'une machine à sécher le linge à évacuation selon un mode de réalisation ;

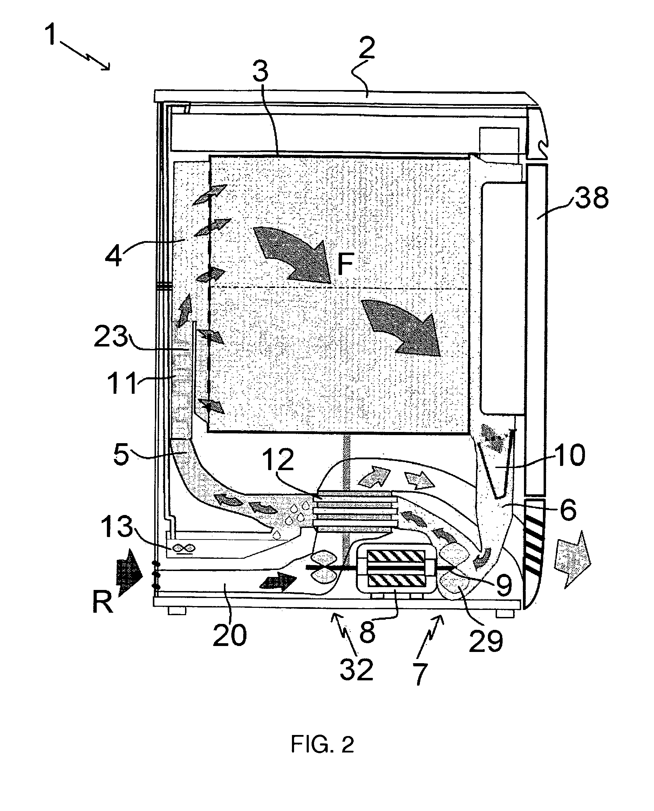

- la figure 2 est une vue schématique d'une machine à sécher le linge à condensation comprenant un condenseur selon un mode de réalisation ;

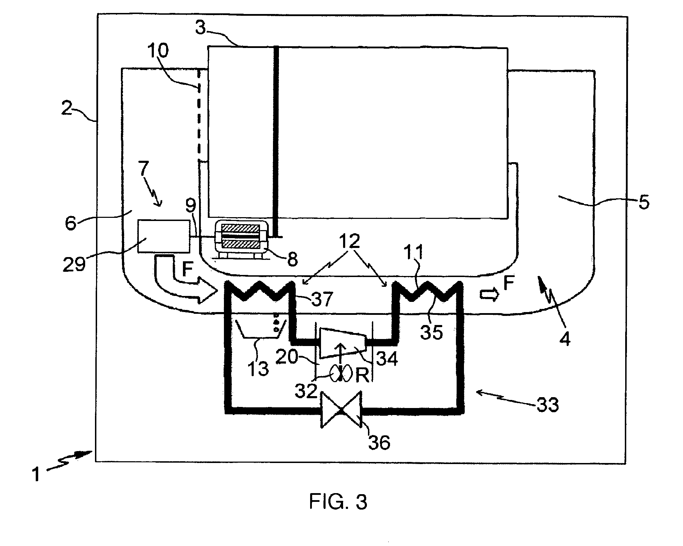

- la figure 3 est une vue schématique d'une machine à sécher le linge à condensation comprenant un dispositif de pompe à chaleur selon un mode de réalisation ;

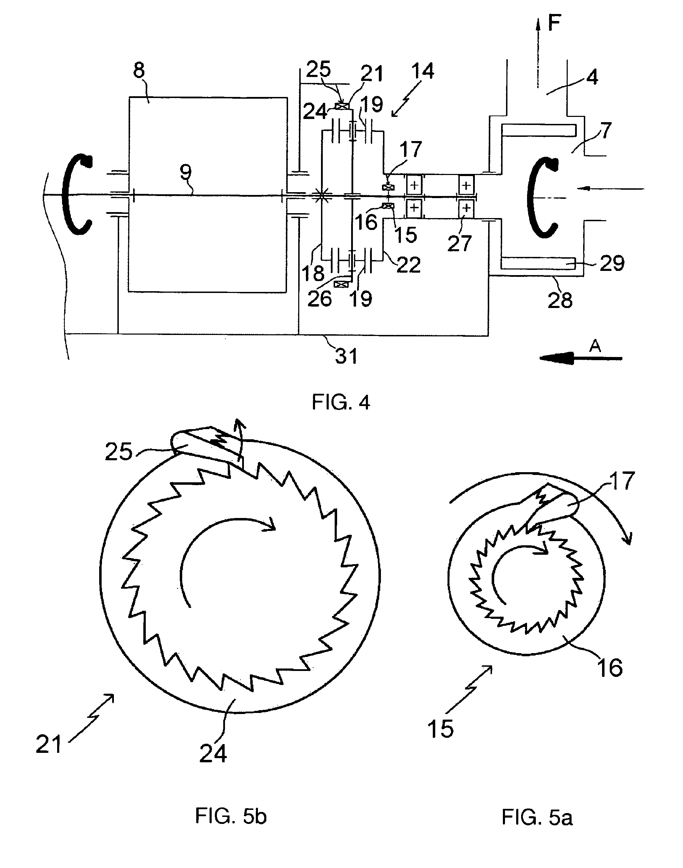

- la figure 4 est un schéma fonctionnel d'un dispositif d'entraînement en rotation d'une turbine d'au moins un ventilateur au moyen d'un moteur selon un mode de réalisation de l'invention dans un premier sens de rotation d'un arbre de sortie du moteur, où l'arbre de sortie du moteur et la turbine dudit au moins un ventilateur sont entraînés en rotation dans le même sens de rotation ;
- les figures 5a et 5b sont respectivement une vue schématique d'un premier et d'un deuxième dispositif anti-retour d'un dispositif d'entraînement intermédiaire en référence à la figure 4 illustrant un dispositif d'entraînement en rotation d'une turbine d'au moins un ventilateur au moyen d'un moteur selon un mode de réalisation de l'invention dans le premier sens de rotation d'un arbre de sortie du moteur, où les vues des figures 5a et 5b sont réalisées suivant la direction de la flèche A de la figure 4 ;

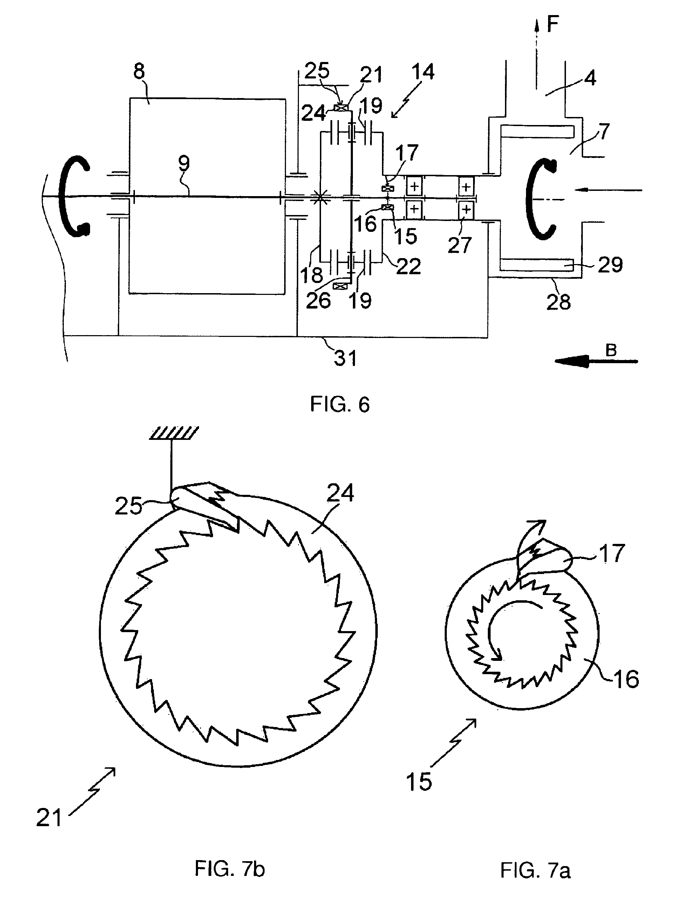

- la figure 6 est un schéma fonctionnel d'un dispositif d'entraînement en rotation d'une turbine d'au moins un ventilateur au moyen d'un moteur selon un mode de réalisation de l'invention dans un deuxième sens de rotation d'un arbre de sortie du moteur, où une turbine dudit au moins un ventilateur est entraînée en rotation en sens inverse par rapport au sens d'entraînement en rotation de l'arbre de sortie du moteur ;
- les figures 7a et 7b sont respectivement une vue schématique d'un premier et d'un deuxième dispositif anti-retour d'un dispositif d'entraînement intermédiaire en référence à la figure 6 illustrant un dispositif d'entraînement en rotation d'une turbine d'au moins un ventilateur au moyen d'un moteur selon un mode de réalisation de l'invention dans le deuxième sens de rotation d'un arbre de sortie du moteur, où les vues des figures 7a et 7b sont réalisées suivant la direction de la flèche B de la figure 6 ;

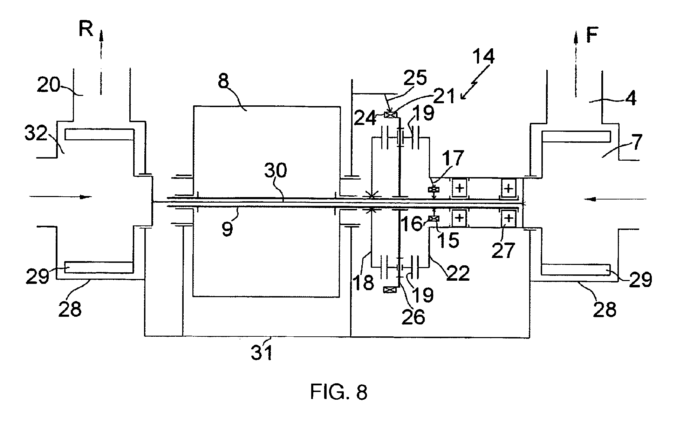

- la figure 8 est un schéma fonctionnel d'un dispositif d'entraînement en rotation d'une turbine d'un premier ventilateur et d'une turbine d'un deuxième ventilateur au moyen d'un seul moteur selon un mode de réalisation de l'invention.

On va décrire tout d'abord en référence aux figures 1 à 3 une machine à sécher le linge 1.

Cette machine à sécher le linge peut être une machine à sécher le linge à usage domestique ou une lavante-séchante à usage domestique du type à évacuation, à condensation ou à pompe à chaleur.

Bien entendu, la présente invention s'applique à tous les types de machine à sécher le linge, et notamment à chargement frontal et à chargement par le dessus du linge.

Cette machine à sécher le linge 1 comporte une carrosserie 2 comprenant une ouverture d'accès (non représentée) à l'intérieur de la carrosserie.

Une porte d'accès 38 est adaptée à obturer cette ouverture de la carrosserie 2 de la machine 1, notamment lors du fonctionnement de celle-ci.

Dans cet exemple de réalisation, et de manière nullement limitative, la porte d'accès 38 est montée pivotante autour d'un axe de rotation solidaire de la carrosserie 2 de la machine 1.

La carrosserie 2 de la machine 1 est adaptée à loger un tambour 3 qui est adapté notamment à sécher le linge par une circulation d'air chaud. Le tambour 3 est mobile en rotation autour d'un axe lors des différentes phases des cycles de séchage de la machine.

On notera que les figures 1 à 3 sont schématiques et que de nombreux organes nécessaires au fonctionnement de la machine ont été omis et n'ont pas besoin d'être décrits en détail ici.

Afin de permettre l'introduction et le retrait du linge à l'intérieur du tambour 3 rotatif, celui-ci comporte de manière connue une porte 38.

Un tableau de commande est également prévu en partie supérieure de la machine 1.

Bien entendu, la machine à sécher le linge conforme à l'invention comporte l'ensemble des équipements et moyens nécessaires à la mise en oeuvre d'un processus de séchage classique dans une telle machine à tambour rotatif.

Le tambour 3 est entraîné en rotation par un moteur 8 et traversé par de l'air de séchage provenant d'un circuit d'air de séchage 4.

Le circuit d'air de séchage 4 comprend au moins une conduite d'entrée d'air de séchage 5 et une conduite de sortie d'air de séchage 6. La conduite d'entrée d'air 5 est reliée à une entrée d'air du tambour 3 et la conduite de sortie d'air 6 à une sortie d'air du tambour 3. Le tambour 3 de la machine à sécher le linge 1 fait partie intégrante du circuit d'air de séchage 4.

Le circuit d'air de séchage 4 comprenant au moins un ventilateur 7. Ledit au moins un ventilateur 7 permet d'entraîner un flux d'air de séchage F entrant par l'entrée d'air du tambour 3, puis au travers dudit tambour 3 contenant les pièces de linge et sortant par la sortie d'air dudit tambour 3. Le séchage du linge contenu dans le tambour 3 est réalisé par le flux d'air F traversant ledit tambour 3 pendant que ledit tambour 3 peut être mis en rotation pour brasser et soulever le linge.

Ledit au moins un ventilateur 7 est monté dans le circuit d'air de séchage 4 pour aspirer de l'air et le forcer à circuler au travers de la conduite d'entrée d'air 5 et de la conduite de sortie d'air 6 dudit circuit d'air de séchage 4.

L'air de séchage est introduit dans le tambour 3 au travers d'au moins une ouverture d'entrée d'air ménagée dans le tambour 3. Le tambour 3 contient les pièces de linge à sécher et les entraînent en rotation au cours d'un cycle de séchage. Le cycle de séchage permet de retirer l'humidité des pièces de linge par de l'air de séchage se chargeant en humidité. L'air de séchage chargé en humidité est évacué par au moins une ouverture de sortie d'air du tambour 3 puis par la conduite de sortie d'air 6.

Dans un mode de réalisation, la machine à sécher le linge 1 comprend au moins un filtre à peluches 10 situé en aval de ladite au moins une ouverture de sortie d'air de séchage du tambour 3.

L'entraînement en rotation du tambour 3 est réalisé par le moteur 8.

A titre d'exemple nullement limitatif, l'entraînement en rotation du tambour 3 peut être réalisé par un moteur électrique et au moyen d'une courroie de transmission.

Le moteur 8 d'entraînement du tambour 3 entraîne également en rotation une turbine 29 dudit au moins un ventilateur 7.

Ledit au moins un ventilateur 7 comprend un carter 28 et une turbine 29.

Le moteur 3 est réalisé de manière à pouvoir être commuté de sorte à pouvoir entraîner en rotation un arbre de sortie 9 dans un premier et un deuxième sens de rotation.

La machine à sécher le linge 1 comprend également au moins un dispositif de chauffage 11 en relation thermique avec le circuit d'air de séchage 4.

Ledit au moins un dispositif de chauffage 11 permet de chauffer l'air de séchage à une température prédéterminée pouvant être contrôlée par une unité de commande (non représentée) de la machine à sécher le linge 1.

Dans un mode de réalisation, ledit au moins un dispositif de chauffage 11 est au moins une résistance chauffante électrique 23 ménagée à l'intérieur d'une conduite du circuit d'air de séchage 4.

Ici et de manière nullement limitative, ladite au moins une résistance chauffante électrique 23 est montée dans la conduite d'entrée d'air 5 du circuit d'air de séchage 4.

Dans un autre mode de réalisation, ledit au moins un dispositif de chauffage 11 est au moins un échangeur de chaleur 35 ménagé à l'intérieur du circuit d'air de séchage 4, et éventuellement au moins une résistance chauffante électrique ménagée à l'intérieur d'une conduite du circuit d'air de séchage 4.

Dans un autre mode de réalisation, ledit au moins un dispositif de chauffage 11 est au moins un générateur de vapeur (non représenté) produisant de la vapeur et évacuant de la vapeur à l'intérieur du circuit d'air de séchage 4, et éventuellement au moins une résistance chauffante électrique ménagée à l'intérieur d'une conduite du circuit d'air de séchage 4 et/ou au moins un échangeur de chaleur 35 ménagé à l'intérieur du circuit d'air de séchage 4.

Dans un mode de réalisation où la machine à sécher le linge est à évacuation, tel qu'illustré à la figure 1, le circuit d'air de séchage 4 est ouvert. Ledit au moins un ventilateur 7 aspire de l'air à l'extérieur de la machine à sécher le linge 1, met en circulation un flux d'air de séchage F dans le circuit d'air de séchage 4, en particulier au travers du tambour 3, puis l'air de séchage est évacué à l'extérieur de la machine 1.

L'air de séchage peut être chauffé par au moins une résistance chauffante électrique 23 ménagée à l'intérieur d'une conduite du circuit d'air de séchage 4. L'air de séchage chauffé traverse le linge contenu dans le tambour 3 et l'air de séchage se charge de l'humidité contenue par le linge et de peluches de linge.

Une telle circulation d'un flux d'air de séchage F est établie dans le circuit d'air de séchage 4 au moyen d'au moins un ventilateur 7.

Bien entendu, le nombre de ventilateur du circuit d'air de séchage n'est nullement limitatif et peut être d'un ou de plusieurs.

Dans un mode de réalisation où la machine à sécher le linge est à condensation, le circuit d'air de séchage 4 est en boucle fermée. Ledit au moins un ventilateur 7 aspire de l'air à l'intérieur du circuit d'air de séchage 4 de la machine à sécher le linge 1, met en circulation un flux d'air de séchage F dans le circuit d'air de séchage 4, en particulier au travers du tambour 3, puis l'air de séchage est évacué à l'intérieur du circuit d'air de séchage 4 de la machine 1.

L'air de séchage peut être chauffé par au moins un dispositif de chauffage 11 en relation thermique avec le circuit d'air de séchage 4. L'air de séchage chauffé traverse le linge contenu dans le tambour 3 et l'air de séchage se charge de l'humidité contenue par le linge et de peluches de linge.

La machine à sécher le linge 1 comprend au moins un échangeur de chaleur 12, 35, 37 positionné dans le circuit d'air de séchage 4.

Bien entendu, le nombre d'échangeurs de chaleur n'est nullement limitatif et peut être de un ou plusieurs.

Dans le cas des machines à sécher le linge 1 à condensation classiques telles qu'illustrées à la figure 2, celles-ci comprennent deux circuits d'air. Un premier circuit d'air est communément appelé circuit d'air de séchage 4, ou encore appelé circuit d'air chaud, et un second circuit d'air appelé circuit d'air de refroidissement 20, ou encore appelé circuit d'air froid.

Le circuit d'air de séchage 4 est en boucle fermée et l'air de séchage est chauffé par au moins une résistance électrique chauffante 23 et/ou par une alimentation en vapeur depuis un générateur de vapeur. L'air de séchage chauffé traverse le linge contenu dans le tambour 3 et l'air de séchage se charge de l'humidité contenue par le linge.

L'air de séchage chauffé et humide sortant du tambour 3 peut traverser un filtre à peluches 10 placé à une sortie d'évacuation du tambour 3 pour récupérer les peluches contenues dans ledit air de séchage chauffé et humide. Un premier ventilateur 7 fait circuler l'air de séchage chaud et humide à l'intérieur d'un condenseur 12. L'air de séchage chaud et humide est refroidi dans des tubes du condenseur 12 et l'humidité de l'air est condensée. Le condenseur 12 est refroidi par échange de chaleur avec de l'air ambiant. Puis, l'air est de nouveau chauffé par ladite au moins une résistance électrique chauffante 23.

La machine à sécher le linge 1 peut également être pourvue d'un condenseur à plaques à la place d'un condenseur à tubes.

Une telle circulation d'un flux d'air de séchage F est établie dans le circuit d'air de séchage 4 au moyen d'au moins un ventilateur 7.

Bien entendu, le nombre de ventilateur du circuit d'air de séchage n'est nullement limitatif et peut être d'un ou de plusieurs.

Le circuit d'air de refroidissement 20 est en circuit ouvert où de l'air ambiant est aspiré par un deuxième ventilateur 32, pouvant être disposé par exemple à l'arrière de la machine à sécher le linge 1. Le deuxième ventilateur 32 propulse de l'air ambiant dans le condenseur 12 sur l'extérieur des tubes dudit condenseur 12 afin de le refroidir. L'air ambiant réchauffé dans le condenseur 12 est évacué à l'extérieur de la machine à sécher le linge 1 par une face de la carrosserie 2 de la machine à sécher le linge 1.

Dans le cas des machines à sécher le linge 1 à condensation comprenant un dispositif de pompe à chaleur telles qu'illustrées à la figure 3, celles-ci comprennent un circuit d'air de séchage 4 et un circuit de réfrigération 33.

Le circuit de réfrigération 33 comprend au moins : un compresseur 34, un condenseur 35, un élément de détente 36 et un évaporateur 37.

L'élément de détente 36 du circuit de réfrigération 33 peut être une vanne de détente ou encore un capillaire d'expansion.

Le circuit d'air de séchage 4 est en boucle fermée et l'air de séchage est chauffé par au moins le condenseur 35 du circuit de réfrigération 33, et éventuellement par au moins une résistance électrique chauffante et/ou par une alimentation en vapeur depuis un générateur de vapeur. L'air de séchage chauffé traverse le linge contenu dans le tambour 3 et l'air de séchage chauffé se charge de l'humidité contenue par le linge.

L'air de séchage chauffé et humide peut traverser un filtre à peluches 10 placé à une sortie d'évacuation du tambour 3 pour récupérer les peluches contenues dans ledit air de séchage chauffé et humide. Un premier ventilateur 7 fait circuler l'air de séchage chaud et humide dans un premier temps à l'intérieur d'un évaporateur 37 puis dans un deuxième temps à l'intérieur d'un condenseur 35.

L'air de séchage chaud et humide est refroidi dans des tubes de l'évaporateur 37 de sorte à condenser l'humidité de l'air de séchage puis réchauffé dans des tubes du condenseur 35.

Puis, l'air de séchage peut également être chauffé par ladite au moins une résistance électrique chauffante et/ou par une alimentation en vapeur depuis un générateur de vapeur situées en amont du tambour 3 avant de traverser à nouveau le tambour 3 contenant les pièces de linge.

La machine à sécher le linge 1 peut également être pourvue d'un condenseur 35 et/ou d'un évaporateur 37 à plaques à la place d'un condenseur 35 et/ou d'un évaporateur 37 à tubes.

Une telle circulation d'un flux d'air de séchage F est établie dans le circuit d'air de séchage 4 au moyen d'au moins un ventilateur 7.

Bien entendu, le nombre de ventilateur du circuit d'air de séchage n'est nullement limitatif et peut être d'un ou de plusieurs.

Le premier ventilateur 7 est préférentiellement situé en amont du condenseur 35 du circuit de réfrigération 33 et en aval du tambour 3 de la machine à sécher le linge 1 dans le sens de circulation du flux d'air de séchage F.

Le circuit de réfrigération 33 est également en boucle fermée.

Le réfrigérant du circuit de réfrigération 33 passe de la sortie de réfrigérant du compresseur 34 sous pression à l'entrée de réfrigérant du condenseur 35. La sortie de réfrigérant du condenseur 35 est connectée à l'entrée de réfrigérant de l'évaporateur 37 au travers de l'élément de détente 36.

L'élément de détente 36 agit comme un élément de séparation entre les niveaux de pression du réfrigérant dans la partie du circuit de réfrigération 33 située en amont dudit élément de détente 36 et dans la partie du circuit de réfrigération 33 située en aval dudit élément de détente 36.

La sortie de réfrigérant de l'évaporateur 37 est connectée à l'entrée de réfrigérant du compresseur 34.

Une telle machine à sécher le linge 1 comprenant un dispositif de pompe à chaleur peut également être pourvue d'un deuxième ventilateur 32 de sorte à refroidir le compresseur 34 avec de l'air ambiant. Un circuit d'air de refroidissement 20 du compresseur 34 est en circuit ouvert où de l'air ambiant est aspiré par le deuxième ventilateur 32, pouvant être disposé par exemple à l'arrière de la machine à sécher le linge 1. Le deuxième ventilateur 32 propulse de l'air ambiant sur le compresseur 34 afin de le refroidir. L'air ambiant réchauffé par le compresseur 34 est évacué à l'extérieur de la machine à sécher le linge 1 par une face de la carrosserie 2 de la machine à sécher le linge 1.

Ledit au moins un échangeur de chaleur 12, 35 de la machine à sécher le linge 1 à condensation, classique ou à pompe à chaleur, est pourvu d'un réservoir de récupération d'eau de condensation 13.

On va décrire à présent, en référence aux figures 4 à 8, un dispositif d'entraînement intermédiaire monté sur un arbre de sortie d'un moteur d'entraînement d'un tambour et d'une turbine d'au moins un ventilateur selon un mode de réalisation de l'invention.

La machine à sécher le linge 1 comprend un dispositif d'entraînement intermédiaire 14 monté sur l'arbre de sortie 9 du moteur 8 de sorte à entraîner en rotation la turbine 29 dudit au moins un ventilateur 7 dans un sens de rotation unique quelque soit le sens d'entraînement en rotation de l'arbre de sortie 9 du moteur 8.

Ainsi, la machine à sécher le linge 1 comprenant un moteur 8 entraînant en rotation un tambour 3 dans un premier et un deuxième sens de rotation et entraînant en rotation une turbine 29 d'au moins un ventilateur 7 dans un unique sens de rotation quelque soit le sens de rotation de l'arbre de sortie 9 du moteur 8 permet de réduire la consommation d'énergie au cours d'un cycle de séchage mis en oeuvre par la machine 1.

De cette manière, un seul moteur 8 entraîne en rotation le tambour 3 et une turbine 29 d'au moins un ventilateur 7, où l'entraînement en rotation du tambour 3 peut être alterné, et où l'entraînement en rotation de la turbine 29 d'au moins un ventilateur 7 est réalisé toujours dans le même sens.

Le dispositif d'entraînement intermédiaire 14 monté sur l'arbre de sortie 9 du moteur 8 permet donc d'entraîner en rotation une turbine 29 d'au moins un ventilateur 7 dans un sens de rotation unique, c'est-à-dire en sortie du dispositif d'entraînement intermédiaire 14, quelque soit le sens d'entraînement en rotation d'un arbre de sortie 9 du moteur 8, c'est-à-dire en entrée du dispositif d'entraînement intermédiaire 14.

En outre, ledit au moins un ventilateur 7 génère un flux d'air de séchage F au travers du tambour 3 contenant le linge à sécher lors de l'entraînement en rotation de l'arbre de sortie 9 du moteur 8 dans les premier et deuxième sens de rotation de sorte à éviter une interruption du séchage du linge.

Par ailleurs, l'entraînement en rotation de l'arbre de sortie 9 du moteur 8 dans un premier et un deuxième sens de rotation, où la turbine 29 d'au moins un ventilateur 7 est entraînée dans un unique sens de rotation quelque soit le sens de rotation de l'arbre de sortie 9 du moteur 8, permet de garantir l'efficacité de séchage du linge contenu dans le tambour 3 par la génération d'un flux d'air de séchage F avec un débit d'air pouvant être maximal quelque soit le sens de rotation de l'arbre de sortie 9 du moteur 8, tout en garantissant le démêlage du linge lors de l'inversion du sens de rotation du tambour 3 par le passage de l'entraînement en rotation de l'arbre de sortie 9 du moteur 8 du premier au deuxième sens de rotation, et inversement.

Pratiquement, dans le premier sens de rotation de l'arbre de sortie 9 du moteur 8, l'arbre de sortie 9 du moteur 8 et la turbine 29 dudit au moins un ventilateur 7 sont entraînés en rotation dans le même sens de rotation, et dans le deuxième sens de rotation de l'arbre de sortie 9 du moteur 8, la turbine 29 dudit au moins un ventilateur 7 est entraînée en rotation en sens inverse par rapport au sens d'entraînement en rotation de l'arbre de sortie 9 du moteur 8.

Ainsi, dans le premier sens de rotation de l'arbre de sortie 9 du moteur 8, où l'arbre de sortie 9 du moteur 8 et la turbine 29 dudit au moins un ventilateur 7 sont entraînés en rotation dans le même sens de rotation, l'entraînement de la turbine 29 dudit au moins un ventilateur 7 est direct, et de préférence à la même vitesse.

Et dans le deuxième sens de rotation de l'arbre de sortie 9 du moteur 8, où la turbine 29 dudit au moins un ventilateur 7 est entraînée en rotation en sens inverse par rapport au sens d'entraînement en rotation de l'arbre de sortie 9 du moteur 8, l'entraînement de la turbine 29 dudit au moins un ventilateur 7 est indirect et au travers d'éléments d'entraînement 18, 19, 22 du dispositif d'entraînement intermédiaire 14 permettant d'inverser le sens de rotation entre l'entrée et la sortie du dispositif d'entraînement intermédiaire 14.

Avantageusement, le tambour 3 est entraîné en rotation dans le même sens de rotation que l'arbre de sortie 9 du moteur 8.

Ainsi, dans le premier sens de rotation de l'arbre de sortie 9 du moteur 8, le tambour 3 et la turbine 29 dudit au moins un ventilateur 7 sont entraînés en rotation dans le même sens de rotation, et dans le deuxième sens de rotation de l'arbre de sortie 9 du moteur 8, la turbine 29 dudit au moins un ventilateur 7 est entraînée en rotation en sens inverse par rapport au sens d'entraînement en rotation du tambour 3.

En outre, l'inversion du sens de rotation du tambour 3 par l'entraînement de l'arbre de sortie 9 du moteur 8 dans le deuxième sens de rotation et le maintien de l'entraînement en rotation de la turbine 29 dudit au moins un ventilateur 7 dans un sens de rotation unique permet de continuer à sécher le linge contenu dans le tambour 3 tout en démêlant celui-ci.

De cette manière, la consommation d'énergie électrique est réduite et la durée de séchage du linge est diminuée.

Ici, le moteur 8 et la turbine 29 dudit au moins un ventilateur 7 sont montés sur un châssis 31 de la machine à sécher le linge 1.

A titre d'exemple nullement limitatif, la liaison 27 entre la turbine 29 dudit au moins un ventilateur 7 et l'arbre de sortie 9 du moteur 8 est représentée aux figures 4, 6 et 8 par des roulements. Cette liaison 27 peut également être réalisée par des paliers lisses.

Pratiquement, le dispositif d'entraînement intermédiaire 14 monté sur l'arbre de sortie 9 du moteur 8 comprend une pluralité d'éléments d'entraînement 18, 19, 22 et au moins un dispositif anti-retour 15, 21.

Ici, les éléments d'entraînement 18, 19, 22 du dispositif d'entraînement intermédiaire 14 sont des engrenages. Et ledit au moins un dispositif anti-retour 15, 21 du dispositif d'entraînement intermédiaire 14 est une roue à rochet 16, 24 coopérant avec un cliquet 17, 25, tel qu'illustré aux figures 5a, 5b et 7a, 7b.

Dans le cas des engrenages en tant qu'éléments d'entraînement du dispositif d'entraînement intermédiaire 14, ceux-ci peuvent être de tout type, et par exemple être des pignons droits, coniques, avec une denture interne ou externe, ou encore hélicoïdaux.

Bien entendu, les éléments d'entraînement du dispositif d'entraînement intermédiaire ne sont nullement limitatifs et peuvent être différents, tels que par exemple des roues à friction ou encore des éléments d'entraînement par bille.

Dans le cas des roues à friction en tant qu'éléments d'entraînement du dispositif d'entraînement intermédiaire 14, celles-ci peuvent être par compression radiale ou axiale, et employant de préférence des matériaux ayant un coefficient de frottement élevé, tels que par exemple métal sur caoutchouc, à l'aide de roues droites ou coniques.

Dans le cas des éléments d'entraînement par bille en tant qu'éléments d'entraînement du dispositif d'entraînement intermédiaire 14, ceux-ci peuvent être par compression radiale ou axiale.

Les éléments d'entraînement du dispositif d'entraînement intermédiaire peuvent être tous types d'éléments de transmission connus de l'homme du métier permettant de pouvoir inverser par une chaîne cinématique le sens de rotation d'un arbre mené par rapport à un arbre menant.

Une roue à rochet coopérant avec un cliquet est un dispositif anti-retour limitant un mécanisme rotatif à tourner dans un seul sens de rotation. La roue à rochet comprend une pluralité d'encoches ménagées sur son pourtour permettant dans un sens de rotation le soulèvement du cliquet pour lui laisser le passage, et dans un sens de rotation opposé le blocage du cliquet contre une paroi d'une encoche.

Bien entendu, ledit au moins un dispositif anti-retour du dispositif d'entraînement intermédiaire n'est nullement limitatif et peut être différent, tel que par exemple un mécanisme de coincement/glissement.

Dans le cas d'un mécanisme de coincement/glissement en tant que dispositif anti-retour du dispositif d'entraînement intermédiaire 14, celui-ci peut comprendre un ressort qui suivant la direction d'une traction tangentielle permet de coincer un arbre autour duquel il est enroulé de sorte à rendre solidaire l'arbre du ressort, ou au contraire permet au ressort de glisser sur un arbre de sorte à dérouler le ressort sans entraîner l'arbre.

Dans le mode de réalisation tel qu'illustré aux figures 4 et 6, la turbine 29 dudit au moins un ventilateur 7 est montée sur l'arbre de sortie 9 du moteur 8.

Dans un autre mode de réalisation non illustré, la turbine 29 dudit au moins un ventilateur 7 est montée sur un autre arbre distinct de l'arbre de sortie 9 du moteur 8, où l'autre arbre est couplé à l'arbre de sortie 9 du moteur 8.

L'autre arbre et l'arbre de sortie 9 du moteur 8 peuvent être coaxiaux, parallèles, ou encore orientés l'un par rapport à l'autre d'un angle prédéterminé, pouvant être compris par exemple entre 0° et 90°.

En référence à la figure 4, dans le premier sens de rotation de l'arbre de sortie 9 du moteur 8, où l'arbre de sortie 9 du moteur 8 et la turbine 29 dudit au moins un ventilateur 7 sont entraînés en rotation dans le même sens de rotation, la chaîne cinématique de l'entraînement en rotation de la turbine 29 dudit au moins un ventilateur 7 passe par l'arbre de sortie 9 du moteur 8, un premier dispositif anti-retour 15 du dispositif d'entraînement intermédiaire 14, et la turbine 29 dudit au moins un ventilateur 7.

Le premier dispositif anti-retour 15 du dispositif d'entraînement intermédiaire 14 comprend une roue à rochet 16 et un cliquet 17.

La roue à rochet 16 du premier dispositif anti-retour 15 est solidaire de l'arbre de sortie 9 du moteur 8.

Le cliquet 17 du premier dispositif anti-retour 15 présente une portée articulée dans une partie de la turbine 29 dudit au moins un ventilateur 7.

Bien entendu, la position du premier dispositif anti-retour du dispositif d'entraînement intermédiaire n'est nullement limitative et peut être différente, et par exemple entre les roues intermédiaires et leur axe de rotation, ou encore entre l'axe de rotation des roues intermédiaires et les roues menée et menante.

Dans le cas où le premier dispositif anti-retour 15 du dispositif d'entraînement intermédiaire 14 est positionné entre les roues intermédiaires 19 et leur axe de rotation 26 ou entre l'axe de rotation 26 des roues intermédiaires 19 et les roues menée 22 et menante 18, l'axe de rotation 26 des roues intermédiaires 19 est entraîné en rotation à la même vitesse de rotation que l'arbre de sortie 9 du moteur 8. La roue à rochet 16 du premier dispositif anti-retour 15 est également entraînée en rotation à la même vitesse de rotation. Les roues intermédiaires 19 ne peuvent tourner autour de l'axe de rotation 26 et la roue menée 22 est ainsi entraînée en rotation par les roues intermédiaires 19 à la même vitesse de rotation et dans le même sens de rotation que la roue menante 18.

En référence à la figure 6, dans le deuxième sens de rotation de l'arbre de sortie 9 du moteur 8, où la turbine 29 dudit au moins un ventilateur 7 est entraînée en rotation en sens inverse par rapport au sens d'entraînement en rotation de l'arbre de sortie 9 du moteur 8, la chaîne cinématique de l'entraînement en rotation de la turbine 29 dudit au moins un ventilateur 7 passe par l'arbre de sortie 9 du moteur 8, une roue menante 18, des roues intermédiaires 19, un deuxième dispositif anti-retour 21, une roue menée 22 du dispositif d'entraînement intermédiaire 14, et la turbine 29 dudit au moins un ventilateur 7.

Le deuxième dispositif anti-retour 21 du dispositif d'entraînement intermédiaire 14 comprend une roue à rochet 24 et un cliquet 25.

La roue à rochet 24 du deuxième dispositif anti-retour 21 est solidaire de l'axe de rotation 26 des roues intermédiaires 19.

Ici, le cliquet 25 du deuxième dispositif anti-retour 21 présente une portée articulée dans une partie du châssis 31.

Dans ce deuxième sens de rotation de l'arbre de sortie 9 du moteur 8, les roues intermédiaires 19 du dispositif d'entraînement intermédiaire 14 sont entraînées en rotation puisque leur axe de rotation 26 est bloqué dans ce sens de rotation par le deuxième dispositif anti-retour 21.

Ainsi, l'entraînement en rotation de la turbine 29 dudit au moins un ventilateur 7 dans un sens de rotation unique à partir du premier sens de rotation et du deuxième sens de rotation de l'arbre de sortie 9 du moteur 8 est garanti par le dispositif d'entraînement intermédiaire 14, et en particulier par les premier et deuxième dispositifs anti-retour 15, 21.

De cette manière, l'entraînement ou non des roues intermédiaires 19 du dispositif d'entraînement intermédiaire 14 est dépendant du blocage ou non du cliquet avec la roue à rochet de chacun des premier et deuxième dispositifs anti-retour 15, 21.

Bien entendu, le nombre de roues intermédiaires du dispositif d'entraînement intermédiaire n'est nullement limitatif et peut être différent, par exemple supérieur à deux.

Le nombre de roues intermédiaires 19 du dispositif d'entraînement intermédiaire 14 est fonction notamment du couple à transmettre et de la nature de celles-ci. Le nombre de roues intermédiaires 19 du dispositif d'entraînement intermédiaire 14 est préférentiellement pair.

Chacune des roues intermédiaires 19 du dispositif d'entraînement intermédiaire 14 présente un axe de rotation 26, pouvant être commun ou séparé.

Ici et de manière nullement limitative, l'axe de rotation 26 des roues intermédiaires 19 du dispositif d'entraînement intermédiaire 14 croisent l'arbre de sortie 9 du moteur 8.

Dans le premier sens de rotation de l'arbre de sortie 9 du moteur 8, où l'arbre de sortie 9 du moteur 8 et la turbine 29 dudit au moins un ventilateur 7 sont entraînés en rotation dans le même sens de rotation, la roue menante 18 et la roue à rochet 16 du premier dispositif anti-retour 15 sont solidaires de l'arbre de sortie 9 du moteur 8.

Dans ce premier sens de rotation de l'arbre de sortie 9 du moteur 8, d'une part la roue à rochet 16 est en prise avec le cliquet 17 du premier dispositif anti-retour 15 de sorte que l'arbre de sortie 9 du moteur 8 entraîne en rotation la roue en rochet 16 et le cliquet 17 du premier dispositif anti-retour 15 ainsi que la turbine 29 dudit au moins un ventilateur 7.

Et d'autre part, la roue menée 22 tourne dans le même sens et à la même vitesse que la roue menante 18 du dispositif d'entraînement intermédiaire 14 de sorte qu'aucun déplacement relatif ne se produit entre les roues intermédiaires 19 et les roues menée et menante 22, 18. Les roues intermédiaires 19 sont donc entraînées par les roues menée et menante 22, 18, et entraînant ainsi l'axe de rotation 26 des roues intermédiaires 19.

Ici, la roue à rochet 24 du deuxième dispositif anti-retour 21 est solidaire de l'axe de rotation 26 des roues intermédiaires 19 du dispositif d'entraînement intermédiaire 14.

Dans ce premier sens de rotation de l'arbre de sortie 9 du moteur 8, la roue à rochet 24 ne peut pas entraîner le cliquet 25 du deuxième dispositif anti-retour 21 puisque le cliquet 25 n'est pas en prise sur une encoche de la roue à rochet 24, mais le cliquet 25 se soulève lors de la rotation de la roue à rochet 24. L'axe de rotation 26 des roues intermédiaires 19 peut donc tourner librement autour de l'arbre de sortie 9 du moteur 8 et par rapport au châssis 31.

Ainsi, le sens de rotation de la turbine 29 dudit au moins un ventilateur 7 est le même que celui de l'arbre de sortie 9 du moteur 8.

De cette manière, la turbine 29 dudit au moins un ventilateur 7 est entraînée dans le premier sens de rotation de l'arbre de sortie 9 du moteur 8 et peut entraîner un flux d'air de séchage F au travers du circuit d'air de séchage 4.

Dans le deuxième sens de rotation de l'arbre de sortie 9 du moteur 8, où la turbine 29 dudit au moins un ventilateur 7 est entraînée en rotation en sens inverse par rapport au sens d'entraînement en rotation de l'arbre de sortie 9 du moteur 8, d'une part la roue à rochet 16 ne peut pas entraîner le cliquet 17 du premier dispositif anti-retour 15 puisque le cliquet 17 n'est pas en prise sur une encoche de la roue à rochet 16, mais le cliquet 17 se soulève lors de la rotation de la roue à rochet 16. Le premier dispositif anti-retour 15 ne peut donc pas entraîner la turbine 29 dudit au moins un ventilateur 7.

Et d'autre part, la roue menante 18 cherche à entraîner en rotation l'ensemble composé des roues intermédiaires 19 et de l'axe de rotation 26 puisque la roue menée 22 étant solidaire de la turbine 29 dudit au moins un ventilateur 7 est immobile. Cependant, la roue à rochet 24 du deuxième dispositif anti-retour 21 étant solidaire de l'axe de rotation 26 empêche la rotation de l'ensemble composé des roues intermédiaires 19 et de l'axe de rotation 26. En effet, le cliquet 25 est en appui sur une des encoches de la roue à rochet 24 du deuxième dispositif anti-retour 21, le cliquet 25 étant lui-même en appui sur une portée du châssis 31. Les roues intermédiaires 19 sont donc contraintes de tourner autour de leur axe de rotation 26 engendrant l'entraînement en rotation de la roue menée 22 et de la turbine 29 dudit au moins un ventilateur 7.

Ainsi, le sens de rotation de la turbine 29 dudit au moins un ventilateur 7 est inversé par rapport au sens de rotation de l'arbre de sortie 9 du moteur 8.

Et le sens de rotation de la turbine 29 dudit au moins un ventilateur 7 est identique que l'arbre de sortie 9 du moteur 8 soit entraîné en rotation dans le premier sens de rotation ou dans le deuxième sens de rotation.

De cette manière, la turbine 29 dudit au moins un ventilateur 7 est entraînée dans le premier sens de rotation de l'arbre de sortie 9 du moteur 8 et peut entraîner un flux d'air de séchage F au travers du circuit d'air de séchage 4.

Préférentiellement, la turbine 29 dudit au moins un ventilateur 7 comprend des pales courbées, où la turbine 29 présente un sens de rotation préférentiel de sorte à pouvoir générer un flux d'air maximal, et le sens de rotation unique de la turbine 29 dudit au moins un ventilateur 7 par l'arbre de sortie 9 du moteur 8 et le dispositif d'entraînement intermédiaire 14 correspond au sens de rotation préférentiel de la turbine 29.

Ainsi, ledit au moins un ventilateur 7 peut générer un flux d'air de séchage F maximal quelque soit le sens de rotation de l'arbre de sortie 9 du moteur 8 et du tambour 3 de sorte à sécher le linge contenu dans le tambour 3 de manière efficace et sans interruption pour le démêlage du linge par une inversion du sens de rotation du tambour 3.

Préférentiellement, le carter 28 dudit au moins un ventilateur 7 est en forme de spirale.

Dans un mode de réalisation, tel qu'illustré à la figure 8, la machine à sécher le linge 1 comprend un premier ventilateur 7 et un deuxième ventilateur 32, la turbine 29 de chacun des premier et deuxième ventilateurs 7, 32 étant entraînée en rotation par l'intermédiaire de l'arbre de sortie 9 du moteur 8 au moyen du dispositif d'entraînement intermédiaire 14.

Ainsi, les deux turbines 29 des premier et deuxième ventilateurs 7, 32 sont entraînées en rotation par le même moteur 8 et le même dispositif d'entraînement intermédiaire 14 de sorte à réduire les coûts d'obtention de la machine à sécher le linge 1 et à minimiser l'encombrement à l'intérieur de la carrosserie 2 de la machine 1.

Préférentiellement, la turbine 29 du premier ventilateur 7 est entraînée en rotation par un arbre de sortie principal 9 du moteur 8 au moyen du dispositif d'entraînement intermédiaire 14, et en ce que la turbine 29 du deuxième ventilateur 32 est entraînée en rotation par un arbre de sortie secondaire 30, l'arbre de sortie secondaire 30 étant couplé à l'arbre de sortie principal 9.

Pratiquement, l'arbre de sortie principal 9 du moteur 8 est creux, et l'arbre de sortie secondaire 30 est disposé à l'intérieur de l'arbre de sortie principal 9.

Ainsi, la turbine 29 du premier ventilateur 7 est motrice par rapport à la turbine 29 du deuxième ventilateur 32.

Dans un mode de réalisation, l'arbre de sortie secondaire 30 est pourvu d'un palier à son extrémité dirigé vers le deuxième ventilateur 32 de sorte à guider en rotation l'arbre de sortie principal 9.

Et l'arbre de sortie secondaire 30 est centré par la liaison 27, en particulier par des roulements, à son extrémité dirigé vers le premier ventilateur 7.

Dans un autre mode de réalisation, l'arbre de sortie secondaire 30 est pourvu d'un premier palier à son extrémité dirigé vers le deuxième ventilateur 32 et d'un deuxième palier à son extrémité dirigé vers le premier ventilateur 7.

Ainsi, le centrage de l'arbre de sortie secondaire 30 n'est pas assuré par l'intérieur de l'arbre de sortie principal 9 mais par les premier et deuxième paliers positionnés par rapport au moteur 8.

Avantageusement, le premier ventilateur 7 est disposé d'un premier côté du moteur 8 et le deuxième ventilateur 32 est disposé d'un deuxième côté du moteur 8, où le deuxième côté est opposé au premier côté du moteur 8 suivant l'axe de l'arbre de sortie 9 du moteur 8.

Dans le cas d'une machine à sécher le linge 1 à condensation, la machine 1 comprend un premier ventilateur 7 mettant en circulation un flux d'air de séchage F au travers du circuit de séchage 4 et un deuxième ventilateur 32 mettant en circulation un flux d'air de refroidissement R au travers d'au moins un échangeur de chaleur 12 ou sur un compresseur 34, où la turbine 29 de chacun des premier et deuxième ventilateurs 7, 32 est entraînée en rotation dans un sens de rotation unique quelque soit le sens d'entraînement en rotation de l'arbre de sortie 9 du moteur 8.

Ainsi, le premier ventilateur 7 du circuit d'air de séchage 4 génère un flux d'air de séchage F quelque soit le sens de rotation de l'arbre moteur 9 du tambour 8 de sorte à sécher le linge contenu dans le tambour 3 de manière efficace et sans interruption pour le démêlage du linge par une inversion du sens de rotation du tambour 3.

Et le deuxième ventilateur 32 du circuit d'air de refroidissement 20 génère un flux d'air de refroidissement R quelque soit le sens de rotation de l'arbre moteur 9 du tambour 8 de sorte à refroidir ledit au moins un échangeur de chaleur 12 ou le compresseur 34 de manière efficace et sans interruption pour le démêlage du linge par une inversion du sens de rotation du tambour 3.

Bien entendu, le dispositif d'entraînement intermédiaire 14 peut être monté du côté de la turbine 29 du premier ventilateur 7 ou du côté de la turbine du ventilateur 32.

Avantageusement, la turbine 29 de chacun des premier et deuxième ventilateurs 7, 32 comprend des pales courbées, où chaque turbine 29 présente un sens de rotation préférentiel de sorte à pouvoir générer un flux d'air maximal, et le sens de rotation unique de chaque turbine 29 des premier et deuxième ventilateurs 7, 32 par l'arbre de sortie 9 du moteur 8 et le dispositif d'entraînement intermédiaire 14 correspond au sens de rotation préférentiel de chaque turbine 29.

Ainsi, le premier ventilateur 7 peut générer un flux d'air de séchage F maximal quelque soit le sens de rotation de l'arbre de sortie 9 du moteur 8 et du tambour 3 de sorte à sécher le linge contenu dans le tambour 3 de manière efficace et sans interruption pour le démêlage du linge par une inversion du sens de rotation du tambour 3.

Et le deuxième ventilateur 32 peut générer un flux d'air de refroidissement R maximal quelque soit le sens de rotation de l'arbre de sortie 9 du moteur 8 et du tambour 3 de sorte à refroidir ledit au moins un échangeur de chaleur 12 ou le compresseur 34 de manière efficace et sans interruption pour le démêlage du linge par une inversion du sens de rotation du tambour 3.

Avantageusement, ledit au moins un dispositif de chauffage 11 est maintenu activé sans interruption au cours d'une étape de séchage d'un cycle de séchage de la machine 1.

Ainsi, ledit au moins un dispositif de chauffage 11 est maintenu activé sans interruption au cours d'une étape de séchage d'un cycle de séchage de la machine 1 de sorte à sécher le linge contenu dans le tambour 3 de manière efficace et sans interruption pour le démêlage du linge par une inversion du sens de rotation du tambour 3, et tout en évitant une surchauffe de celui-ci provoquant sa destruction ou une mise en sécurité de la machine à sécher le linge 1 par l'activation d'un élément de coupure de l'alimentation électrique, et en empêchant d'endommager le linge contenu dans le tambour 3.

Avantageusement, le deuxième sens de rotation de l'arbre de sortie 9 du moteur 8, où la turbine 29 dudit au moins un ventilateur 7 est entraînée en rotation en sens inverse par rapport au sens d'entraînement en rotation de l'arbre de sortie 9 du moteur 8, correspond au sens d'entraînement en rotation du tambour 3 permettant de défouler le linge contenu dans le tambour 3.

Ainsi, l'inversion du sens de rotation de l'arbre de sortie 9 du moteur 8 permet d'entraîner en rotation le tambour 3 dans les deux sens de rotation tout en entraînant la turbine 29 dudit au moins un ventilateur 7 dans un sens de rotation unique de sorte à défouler le linge contenu dans le tambour 3 et à optimiser le séchage le linge quelque soit le sens de rotation de l'arbre de sortie 9 du moteur 8.

La machine à sécher le linge 1 comporte une unité de commande comprenant au moins une carte électronique (non représentée). Cette carte électronique comprend un microcontrôleur apte à mettre en fonctionnement la machine à sécher le linge conforme à l'invention. Ainsi, l'unité de commande contrôle notamment le moteur 8 d'entraînement en rotation du tambour 3 et dudit au moins un ventilateur 7 du circuit d'air de séchage 4, et éventuellement du ventilateur 32 du circuit d'air de refroidissement 20 de sorte à entraîner en rotation la turbine 29 du ou des ventilateurs 7, 32 dans un sens de rotation unique quelque soit le sens d'entraînement en rotation de l'arbre de sortie 9 du moteur 8, comme décrit précédemment.

Grâce à la présente invention, la machine à sécher le linge comprenant un moteur entraînant en rotation un tambour dans un premier et un deuxième sens de rotation et entraînant en rotation une turbine d'au moins un ventilateur dans un unique sens de rotation quelque soit le sens de rotation de l'arbre de sortie du moteur permet de réduire la consommation d'énergie au cours d'un cycle de séchage mis en oeuvre par la machine.

De cette manière, un seul moteur entraîne en rotation le tambour et une turbine d'au moins un ventilateur, où l'entraînement en rotation du tambour peut être alterné, et où l'entraînement en rotation de la turbine d'au moins un ventilateur est réalisé toujours dans le même sens.

Le dispositif d'entraînement intermédiaire monté sur l'arbre de sortie du moteur permet donc d'entraîner en rotation une turbine d'au moins un ventilateur dans un sens de rotation unique, c'est-à-dire en sortie du dispositif d'entraînement intermédiaire, quelque soit le sens d'entraînement en rotation d'un arbre de sortie du moteur, c'est-à-dire en entrée du dispositif d'entraînement intermédiaire.

En outre, ledit au moins un ventilateur génère un flux d'air de séchage au travers du tambour contenant le linge à sécher lors de l'entraînement en rotation de l'arbre de sortie du moteur dans les premier et deuxième sens de rotation de sorte à éviter une interruption du séchage du linge.

Bien entendu, de nombreuses modifications peuvent être apportées aux exemples de réalisation décrits précédemment sans sortir du cadre de l'invention.

Ainsi, le dispositif d'entraînement intermédiaire associé à l'arbre de sortie du moteur de la machine à sécher le linge pourrait également être employé dans une machine à laver et à sécher le linge.

## Revendications

1. Machine à sécher le linge (1) comprenant une carrosserie (2) logeant un tambour (3), ledit tambour (3) étant entraîné en rotation par un moteur (8) et traversé par de l'air de séchage provenant d'un circuit d'air de séchage (4), ledit circuit d'air de séchage (4) comprenant au moins un ventilateur (7), ledit moteur (8) d'entraînement dudit tambour (3) entraînant également en rotation une turbine (29) dudit au moins un ventilateur (7), ledit moteur (8) étant réalisé de manière à pouvoir être commuté de sorte à pouvoir entraîner en rotation un arbre de sortie (9) dans un premier et un deuxième sens de rotation, ladite machine (1) comprenant également au moins un dispositif de chauffage (11) en relation thermique avec ledit circuit d'air de séchage (4), **caractérisée en ce que** ladite machine (1) comprend un dispositif d'entraînement intermédiaire (14) monté sur ledit arbre de sortie (9) dudit moteur (8) de sorte à entraîner en rotation ladite turbine (29) dudit au moins un ventilateur (7) dans un sens de rotation unique quelque soit le sens d'entraînement en rotation dudit arbre de sortie (9) dudit moteur (8), où ledit dispositif d'entraînement intermédiaire (14) monté sur ledit arbre de sortie (2) dudit moteur (8) comprend une pluralité d'éléments d'entraînement (18, 19, 22) et au moins un dispositif anti-retour (15, 21).

2. Machine à sécher le linge (1) selon la revendication 1, **caractérisée en ce que** dans le premier sens de rotation dudit arbre de sortie (9) dudit moteur (8), ledit arbre de sortie (9) dudit moteur (8) et ladite turbine (29) dudit au moins un ventilateur (7) sont entraînés en rotation dans le même sens de rotation, et dans le deuxième sens de rotation dudit arbre de sortie (9) dudit moteur (8), ladite turbine (29) dudit au moins un ventilateur (7) est entraînée en rotation en sens inverse par rapport au sens d'entraînement en rotation dudit arbre de sortie (9) dudit moteur (8).

3. Machine à sécher le linge (1) selon la revendication 1 ou 2, **caractérisée en ce que** ledit tambour (3) est entraîné en rotation dans le même sens de rotation que ledit arbre de sortie (9) dudit moteur (8).

4. Machine à sécher le linge (1) selon l'une quelconque des revendications 1 à 3, **caractérisée en ce que** ladite turbine (29) dudit au moins un ventilateur (7) comprend des pales courbées, où ladite turbine (29) présente un sens de rotation préférentiel de sorte à pouvoir générer un flux d'air maximal, et **en ce que** ledit sens de rotation unique de ladite turbine (29) dudit au moins un ventilateur (7) par ledit arbre de sortie (9) dudit moteur (8) et ledit dispositif d'entraînement intermédiaire (14) correspond au sens de rotation préférentiel de ladite turbine (29).

5. Machine à sécher le linge (1) selon l'une quelconque des revendications 1 à 4, **caractérisée en ce que** ladite machine comprend un premier ventilateur (7) et un deuxième ventilateur (32), la turbine (29) de chacun desdits premier et deuxième ventilateurs (7, 32) étant entraînée en rotation par l'intermédiaire dudit arbre de sortie (9) dudit moteur (8) au moyen dudit dispositif d'entraînement intermédiaire (14).

6. Machine à sécher le linge (1) selon la revendication 5, **caractérisée en ce que** la turbine (29) dudit premier ventilateur (7) est entraînée en rotation par un arbre de sortie principal (9) dudit moteur (8) au moyen dudit dispositif d'entraînement intermédiaire (14), et **en ce que** la turbine (29) dudit deuxième ventilateur (32) est entraînée en rotation par un arbre de sortie secondaire (30), ledit arbre de sortie secondaire (30) étant couplé audit arbre de sortie principal (9).

7. Machine à sécher le linge (1) selon l'une quelconque des revendications 1 à 6, **caractérisée en ce que** ladite machine (1) comprend un premier ventilateur (7) mettant en circulation un flux d'air de séchage (F) au travers dudit circuit de séchage (4) et un deuxième ventilateur (32) mettant en circulation un flux d'air de refroidissement (R) au travers d'au moins un échangeur de chaleur (12) ou sur un compresseur (34), où la turbine (29) de chacun desdits premier et deuxième ventilateurs (7, 32) est entraînée en rotation dans un sens de rotation unique quelque soit le sens d'entraînement en rotation dudit arbre de sortie (9) dudit moteur (8).

8. Machine à sécher le linge (1) selon l'une quelconque des revendications 1 à 7, **caractérisée en ce que** ledit au moins un dispositif de chauffage (11) est maintenu activé sans interruption au cours d'une étape de séchage d'un cycle de séchage de ladite machine (1).

9. Machine à sécher le linge (1) selon l'une quelconque des revendications 1 à 8, **caractérisée en ce que** le deuxième sens de rotation dudit arbre de sortie (9) dudit moteur (8), où ladite turbine (9) dudit au moins un ventilateur (7) est entraînée en rotation en sens inverse par rapport au sens d'entraînement en rotation dudit arbre de sortie (9) dudit moteur (8), correspond au sens d'entraînement en rotation dudit tambour (3) permettant de défouler le linge contenu dans ledit tambour (3).

## Patentansprüche

1. Wäschetrockner (1), umfassend ein Gehäuse (2), in welchem eine Trommel (3) untergebracht ist, wobei die besagte Trommel (3) von einem Motor (8) drehbar angetrieben und von der von einem Trocknungsluftkreislauf (4) kommenden Trocknungsluft durchströmt wird, wobei der besagte Trocknungsluftkreislauf (4) mindestens ein Gebläse (7) umfasst, wobei der besagte Antriebsmotor (8) der besagten Trommel (3) ebenfalls eine Turbine (29) des besagten mindestens einen Gebläses (7) drehbar antreibt, wobei der besagte Motor (8) derart ausgeführt ist, dass er geschaltet werden kann, um eine Ausgangswelle (9) in einer ersten und einer zweiten Drehrichtung drehbar antreiben zu können, wobei der besagte Trockner (1) ebenfalls mindestens eine Heizvorrichtung (11), welche mit dem besagten Trocknungsluftkreislauf (4) in thermischer Verbindung steht, umfasst, **dadurch gekennzeichnet, dass** der besagte Trockner (1) eine Zwischenantriebsvorrichtung (14) umfasst, welche derart auf der besagten Ausgangswelle (9) des besagten Motors (8) montiert ist, dass die besagte Turbine (29) des besagten Gebläses (7) in einer einzigen Drehrichtung, unabhängig von der Drehantriebsrichtung der besagten Ausgangswelle (9) des besagten Motors (8), drehbar angetrieben wird, wobei die auf der besagten Ausgangswelle (2) des besagten Motors (8) montierte Zwischenantriebsvorrichtung (14) eine Vielzahl von Antriebselementen (18, 19, 22) und mindestens eine Rücklaufsperre (15, 21) umfasst.

2. Wäschetrockner (1) nach Anspruch 1, **dadurch gekennzeichnet, dass** die besagte Ausgangswelle (9) des besagten Motors (8) und die besagte Turbine (29) des besagten mindestens einen Gebläses (7) in der ersten Drehrichtung der besagten Ausgangswelle (9) des besagten Motors (8) in derselben Drehrichtung drehbar angetrieben werden und die besagte Turbine (29) des besagten mindestens einen Gebläses (7) in der zweiten Drehrichtung der besagten Ausgangswelle (9) des besagten Motors (8) entgegengesetzt zu der Drehantriebsrichtung der besagten Ausgangswelle (9) des besagten Motors (8) drehbar angetrieben wird.

3. Wäschetrockner (1) nach Anspruch 1 oder 2, **dadurch gekennzeichnet, dass** die besagte Trommel (3) in derselben Drehrichtung wie die besagte Ausgangswelle (9) des besagten Motors (8) drehbar angetrieben wird.

4. Wäschetrockner (1) nach einem beliebigen der Ansprüche 1 bis 3, **dadurch gekennzeichnet, dass** die besagte Turbine (29) des besagten Gebläses (7) gekrümmte Schaufeln umfasst, wobei die besagte Turbine (29) eine bevorzugte Drehrichtung aufweist, um einen maximalen Luftstrom erzeugen zu können, und dass die besagte einzige Drehrichtung der besagten Turbine (29) des besagten mindestens einen Gebläses (7) durch die besagte Ausgangswelle (9) des besagten Motors (8) und die Zwischenantriebsvorrichtung (14) der bevorzugten Drehrichtung der besagten Turbine (29) entspricht.

5. Wäschetrockner (1) nach einem beliebigen der Ansprüche 1 bis 4, **dadurch gekennzeichnet, dass** der besagte Trockner ein erstes Gebläse (7) und ein zweites Gebläse (32) umfasst, wobei die Turbine (29) eines jeden der besagten ersten und zweiten Gebläse (7, 32) anhand der besagten Zwischenantriebsvorrichtung (14) durch die besagte Ausgangswelle (9) des besagten Motors (8) drehbar angetrieben wird.

6. Wäschetrockner (1) nach Anspruch 5, **dadurch gekennzeichnet, dass** die besagte Turbine (29) des besagten ersten Gebläses (7) anhand der besagten Zwischenantriebsvorrichtung (14) durch eine Hauptausgangswelle (9) des besagten Motors (8) drehbar angetrieben wird, und dass die besagte Turbine (29) des besagten Gebläses (32) durch eine sekundäre Ausgangswelle (30) drehbar angetrieben wird, wobei die besagte sekundäre Ausgangswelle (30) an die besagte Hauptausgangswelle (9) gekoppelt ist.

7. Wäschetrockner (1) nach einem beliebigen der Ansprüche 1 bis 6, **dadurch gekennzeichnet, dass** der besagte Trockner (1) ein erstes Gebläse (7), welches einen Trocknungsluftstrom (F) über den besagten Trocknungskreislauf (4) in Umlauf bringt, und ein zweites Gebläse (32), welches einen Kühlluftstrom (R) über mindestens einen Wärmetauscher (12) oder auf einem Verdichter (34) in Umlauf bringt, umfasst, wobei die Turbine (29) eines jeden der besagten ersten und zweiten Gebläse (7, 32) in einer einzigen Drehrichtung, unabhängig von der Drehantriebsrichtung der besagten Ausgangswelle (9) des besagten Motors (8), drehbar angetrieben wird.

8. Wäschetrockner (1) nach einem beliebigen der Ansprüche 1 bis 7, **dadurch gekennzeichnet, dass** die besagte mindestens eine Heizvorrichtung (11) während eines Trocknungsvorgangs eines Trocknungszyklus des besagten Trockners (1) ununterbrochen in aktivem Zustand gehalten wird.

9. Wäschetrockner (1) nach einem der Ansprüche 1 bis 8, **dadurch gekennzeichnet, dass** die zweite Drehrichtung der besagten Ausgangswelle (9) des besagten Motors (8), in welcher die besagte Turbine (9) des besagten mindestens einen Gebläses (7) entgegengesetzt zu der Drehantriebsrichtung der besagten Ausgangswelle (9) des besagten Motors (8) drehbar angetrieben wird, der Drehantriebsrichtung der besagten Trommel (3) entspricht, wodurch ein Lockern der Wäsche in der besagten Trommel (3) ermöglicht wird.

## Claims

1. A laundry drying machine (1) comprising a body (2) housing a drum (3), said drum (3) being rotationally driven by a motor (8) and traversed by drying air coming from a drying air circuit (4), said drying air circuit (4) comprising at least one fan (7), said motor (8) that rotationally drives said drum (3) further rotationally driving a turbine (29) of said at least one fan (7), said motor (8) being constructed so that it can be switched between rotationally driving an output shaft (9) in a first and a second direction of rotation, said machine (1) further comprising at least one heating device (11) in thermal connection with said drying air circuit, **characterized in that** said machine (1) comprises an intermediate driving device (14) mounted on said output shaft (9) of said motor (8) so as to rotationally drive said turbine (29) of said at least one fan (7) in a single direction of rotation regardless of the direction of rotational driving of said output shaft (9) of said motor (8), in which said intermediate driving device (14) mounted on said output shaft (2) of said motor (8) comprises a plurality of driving elements (18, 19, 22) and at least one non-return device (15, 21).

2. A laundry drying machine (1) according to claim 1, **characterized in that** the first direction of rotation of said output shaft (9) of said motor (8), said output shaft (9) of said motor (8) and said turbine (29) of said at least one fan (7) are rotationally driven in the same direction of rotation, and in the second direction of rotation of said output shaft (9) of said motor (8), said turbine (29) of said at least one fan (7) is rotationally driven in the direction opposite to the direction of rotational driving of said output shaft (9) of said motor (8).

3. A laundry drying machine (1) according to claim 1 or 2, **characterized in that** said drum (3) is rotationally driven in the same direction of rotation as said output shaft (9) of said motor (8).

4. A laundry drying machine (1) according to any one of the claims 1 to 3, **characterized in that** said turbine (29) of said at least one fan (7) comprises curved blades, in which said turbine (29) has a preferential direction of rotation so as to be able to generate a maximum air flow, and **in that** said single direction in which said turbine (29) of said at least one fan (7) is rotationally driven by said output shaft (9) of said motor (8) and said intermediate driving device (14) corresponds to the preferential direction of rotation of said turbine (29).

5. A laundry drying machine (1) according to any one of the claims 1 to 4, **characterized in that** said machine comprises a first fan (7) and a second fan (32), the turbine (29) of each of said first and second fans (7, 32) being rotationally driven by means of said output shaft (9) of said motor (8) by means of said intermediate driving device (14).

6. A laundry drying machine (1) according to claim 5, **characterized in that** the turbine (29) of said first fan (7) is rotationally driven by a primary output shaft (9) of said motor (8) by means of said intermediate driving device (14), and **in that** the turbine (29) of said second fan (32) is rotationally driven by a secondary output shaft (30), said secondary output shaft (30) being coupled to said primary output shaft (9).

7. A laundry drying machine (1) according to any one of the claims 1 to 6, **characterized in that** said machine (1) comprises a first fan (7) circulating a drying air flow (F) through said drying circuit (4) and a second fan (32) circulating a cooling air flow (R) through at least one heat exchanger (12) or onto a compressor (34), in which the turbine (29) of each of said first and second fans (7, 32) is rotationally driven in a single direction of rotation regardless of the rotational driving direction of said output shaft (9) of said motor (8).

8. A laundry drying machine (1) according to any one of the claims 1 to 7, **characterized in that** said at least one heating device (11) is kept on without interruption during a step of drying of a drying cycle of said machine (1).

9. A laundry drying machine (1) according to any one of the claims 1 to 8, **characterized in that** the second direction of rotation of said output shaft (9) of said motor (8), in which said turbine (9) of said at least one fan (7) is rotationally driven in the direction opposite to the direction of rotational driving of said output shaft (9) of said motor (8), corresponds to the direction of rotational driving of said drum (3) making it possible to vent the laundry contained in said drum (3).
